# EUROPEAN PATENT APPLICATION

(11) **EP 4 678 381 A1**
(43) Date of publication of application: **14.01.2026**
(21) Application number: 23927143.0
(22) Date of filing: 13.11.2023
(51) Int. Cl.: B29C 64/393, B29C 64/264, B33Y 50/02, B29C 64/124, B29C 64/386

(54) **3D PRINTING METHOD, APPARATUS, 3D PRINTER, AND COMPUTER DEVICE**

(30) Priority: 10.03.2023 CN 202310235431
(71) Applicant: Guangzhou Heygears IMC. Inc, Guangzhou, Guangdong 510663 (CN)
(72) Inventor: WAN, Xin, Guangzhou, Guangdong 510663 (CN); HU, Jun, Guangzhou, Guangdong 510663 (CN); DAI, Wanjing, Guangzhou, Guangdong 510663 (CN); ZENG, Hongqing, Guangzhou, Guangdong 510663 (CN)
(74) Representative: Grassi, Stefano
(86) International application number: PCT/CN2023/131324
(87) International publication number: WO 2024/187802

(57) **Abstract**

The present invention provides a method and apparatus for 3D printing, a 3D printer and a computer device. The method comprises: acquiring a slice image set of a three-dimensional model to be printed; determining cross section information of each slice image in the slice image set, and calculating a printing difficulty value of each slice image in the slice image set based on the cross section information; and determining printing parameters of each slice image based on the printing difficulty value, and determining a printing operation based on the printing parameters, so as to print the three-dimensional model based on the printing operation. In embodiments of the present invention, in the printing process, the printing parameters may be adaptively adjusted along with the changes in the printing difficulty values of the slice images, thereby improving the success rate of printing and the printing quality, and increasing the printing efficiency.

## Description

The present invention claims priority to Chinese Patent Application No. 202310235431.5, filed to the China National Intellectual Property Administration on March 10, 2023, and entitled "Method and Apparatus for 3D Printing, 3D Printer, and Computer Device", which is incorporated herein by reference in its entirety.

### Technical Field

The present invention relates to the technical field of intelligent manufacturing, and in particular, to a method and an apparatus for 3D printing, a 3D printer and a computer device.

### Background

3D printing, i.e. one of rapid prototyping technologies, also referred to as additive manufacturing, is a technology for constructing an object by means of layer-by-layer printing based on a digital model file by using adhesive materials, such as a metal material, an inorganic non-metal material, or a polymer material. In the process of printing a three-dimensional model, slicing processing may be first performed on the three-dimensional model to obtain two-dimensional slice images, and printing is performed layer by layer according to the two-dimensional slice images.

In the process of printing the three-dimensional model, generally, a user analyzes a printing difficulty of the three-dimensional model based on his/her own 3D printing experience, so as to set printing parameters of a 3D printer based on the printing difficulty, or directly use printing parameters provided by a manufacturer of the 3D printer. However, each two-dimensional slice image has a cross-section pattern with different shapes, sizes or distributions, which leads to a great difference in printing difficulties of the two-dimensional slice images. A user typically set printing parameters of a printer according to printing parameters provided by the manufacturer or experience, these printing parameters are possibly not suitable for printing difficulties of all two-dimensional slice images. The set printing parameters are not suitable for some of the two-dimensional slice images if the printing parameters setting is loose, which leads to printing failure or poor printing quality of the three-dimensional model. The printing failure or poor printing quality is avoided to some extent if the printing parameters setting is strict, however, it costs a longer printing time. Therefore, it is difficult to take into account both the printing quality and the printing efficiency.

### Summary

Embodiments of the present invention provide a method and apparatus for 3D printing, a 3D printer and a computer device.

According to a first aspect, embodiments of the present invention provide a method for 3D printing, including:
a slice image set of a three-dimensional model to be printed is acquired;
cross section information of each slice image in the slice image set is determined, and a printing difficulty value of each slice image is calculated based on the cross section information; and
printing parameters of each slice image are determined based on the printing difficulty value, and a printing operation is determined based on the printing parameters, so as to print the three-dimensional model based on the printing operation.
In some optional embodiments, the cross section information includes at least one of the number of cross sections, a cross section area or cross section shape information;
the printing difficulty value of each slice image is calculated based on the cross section information, includes:
   when the number of cross sections is one, the printing difficulty value of each slice image is determined based on the cross section area and the cross section shape information.
   In some optional embodiments, the cross section information includes at least one of the number of cross sections, a cross section area, cross section shape information, or influence factors among the cross sections;
   the printing difficulty value of each slice image is calculated based on the cross section information, includes:
      when the number of cross sections is two or more, sub-difficulty values of the cross sections of each slice image are calculated based on the number of cross sections, the cross section area, the cross section shape information and the influence factors among the cross sections; and
      the printing difficulty value of each slice image is determined based on the sub-difficulty values.

In some optional embodiments, the influence factors among the cross sections include at least one of following: position information of each cross section in the slice image, a minimum circumscribed circle of each cross section in the slice image, a minimum bounding rectangle of each cross section in the slice image, a ratio of an area of each cross section in the slice image to an area of an entire slice image, relative positions among the cross sections in the slice image, relative area sizes among the cross sections in the slice image, a minimum spacing between the cross sections in the slice image, or a ratio of an area of all the cross sections in the slice image to an area of an entire slice.

In some optional embodiments, the printing difficulty value of each slice image is determined based on the sub-difficulty values, includes:
target slice cross sections of which the sub-difficulty values satisfy a difficulty value condition in the slice image are determined, and a weight value of each of the target slice cross sections is determined; and
a product sum of the sub-difficulty values and the weight values of the target slice cross sections is calculated, and the printing difficulty value of the slice image is determined based on the product sum.

In some optional embodiments, the weight value of each of the target slice cross sections is determined, includes:
an influence parameter of the remaining slice cross section other than the target slice cross section in the slice image on the target slice cross section is determined; wherein the influence parameters include at least one of following: cross section areas, bounding rectangle areas or radii of minimum circumscribed circles of the remaining slice cross sections and the target slice cross section respectively, or a relative position, a relative area size and a minimum spacing between the remaining slice cross sections and the target slice cross section; and
the weight value is determined based on the influence parameters.

In some optional embodiments, the target slice cross sections of which the sub-difficulty values satisfy the difficulty value condition in the slice image are determined, includes:
the slice cross sections are sorted in a descending order based on the sub-difficulty values of the slice cross sections in the slice image, to obtain a sorting result; and
the value selection number defined by the difficulty value condition is determined, at least one target sub-difficulty value from the sub-difficulty values is determined according to the sorting result, and the target slice cross section of each of the at least one target sub-difficulty value is determined.

In some optional embodiments, after the printing difficulty value of each slice image is determined based on the sub-difficulty values, the method further includes:
distribution data of slice cross sections in the slice image is determined; wherein the distribution data includes at least one of following: the number of slice cross sections, an area of each slice cross section, relative positions between the cross sections, relative sizes between the cross sections, or a ratio of an area of all the slice cross sections to an area of an entire slice image;
a compensation parameter is determined based on the distribution data in cases where it is determined that the slice image is of a target type according to the distribution data; wherein the target type is used for indicating that slice cross sections in the slice image are unevenly distributed; and
an update operation is performed on the printing difficulty value of the slice image based on the compensation parameter.

In some optional embodiments, the cross section shape information includes at least one type of data information of following: a bounding rectangle, a minimum circumscribed circle or a discrete degree of a cross sections in the slice image.

In some optional embodiments, the printing parameters include at least one of following: a mask image parameter, a mask image exposure time parameter, a mask image edge optimization setting parameter, a mask image anti-aliasing optimization parameter, a mask image tolerance compensation parameter, a mask image light-uniformity optimization compensation parameter, an exposure energy parameter, an exposure time parameter, an additional exposure parameter, a forming platform lifting speed parameter, a forming platform lifting stroke parameter, a forming platform lowering speed parameter, a forming platform lowering stroke parameter, a forming platform rest time parameter, a printing wait time parameter, a light source lamp-on time parameter, a lamp-off delay time parameter, a projection screen-on time parameter, a projection screen-off delay time parameter, a slice layer thickness parameter, a predetermined bottom layer number parameter, a slice bottom layer optimization setting parameter, a printing support setting parameter, or a resin property parameter.

In some optional embodiments, the printing operation is determined based on the printing parameters, includes:
a value range of the printing difficulty value is acquired, and a plurality of printing difficulty ranges are preset based on the value range;
a printing difficulty range of each slice image is determined based on the printing difficulty value of each slice image; and
corresponding printing parameters are set for each printing difficulty range, and the printing operation is determined based on the printing parameters.

In some optional embodiments, the printing difficulty ranges include a target type range, wherein the target type range includes a plurality of printing difficulty sub-ranges of different lengths;
the printing difficulty range of each slice image is determined based on the printing difficulty value of each slice image, includes:
frequency distribution segments of the printing difficulty values are determined; wherein the frequency distribution segments are used for indicating the distribution of the number of printing difficulty values of each numerical value;
a target printing difficulty value satisfying a frequency condition is determined based on the frequency distribution segments; and
the target type range matching the target printing difficulty value is determined, and a printing difficulty sub-range matching the printing difficulty value of each slice image is determined in the target type range.

According to a second aspect, embodiments of the present invention further provide an apparatus for 3D printing, including:
an acquisition unit, configured to acquire a slice image set of a three-dimensional model to be printed;
a first determination unit, configured to determine cross section information of slice cross sections of each slice image in the slice image set, and calculate a printing difficulty value of each slice image based on the cross section information; and
a second determination unit, configured to determine printing parameters of each slice image based on the printing difficulty value, and determine a printing operation based on the printing parameters, so as to print the three-dimensional model based on the printing operation.

According to a third aspect, embodiments of the present invention further provide a 3D printer, including: a slicing module, a processor, a controller, a forming platform and a material tray;
the slicing module is configured to acquire a slice image set of a three-dimensional model to be printed;
the processor is configured to determine a printing difficulty value of each slice image in the slice image set, and determine printing parameters of each slice image based on the printing difficulty value;
the controller is configured to control, based on the printing parameters of each slice image, the forming platform to successively execute a printing operation on the slice images of all layers;
the forming platform is configured to perform layer-by-layer curing and separation in response to the printing operation, so as to execute the printing operation on the slice images of all layers; and
the material tray is configured to carry liquid resin, wherein after descending and curing one layer, the forming platform is separated from the material tray.

According to a fourth aspect, embodiments of the present invention further provide a computer device, including: a processor, a memory and a bus, the memory storing a machine-readable instruction executable by the processor; when the computer device runs, the processor communicates with the memory by means of the bus, and when the machine-readable instruction is executed by the processor, steps of the first aspect, or steps of any possible embodiment of the first aspect are executed.

According to a fifth aspect, embodiments of the present invention further provide a computer-readable storage medium, the computer-readable storage medium storing a computer program thereon, wherein when executed by a processor, the computer program executes the steps of the first aspect, or steps of any possible embodiment of the first aspect.

In embodiments of the present invention, first, a slice image set of a three-dimensional model may be acquired, and a printing difficulty value of each slice image is calculated according to cross section information in the slice image. Then, printing parameters of each slice image are determined based on the printing difficulty value, and a printing operation is determined based on the printing parameters, so as to print the three-dimensional model based on the printing operation, such that in the printing process, the printing parameters may be adaptively adjusted along with the changes in the printing difficulty values of the slice images, thereby improving the success rate of printing and the printing quality, and increasing the printing efficiency.

In order to make the described objects, features and advantages of the present invention more apparent and easily understood, hereinafter, preferred embodiments will be exemplified and described in detail below in conjunction with the accompanying drawings.

### Brief Description of the Drawings

In order to illustrate technical solutions of embodiments of the present invention more clearly, hereinafter, accompanying drawings requiring to be used in the embodiments will be briefly introduced. The accompanying drawings herein are incorporated into the description and form a part of the description, these accompanying drawings illustrate embodiments conforming to the present invention, and serve to explain the technical solutions of the present invention together with the description. It should be understood that the following accompanying drawings only illustrate certain embodiments of the present invention, and therefore shall not be considered as limiting the scope. For a person of ordinary skill in the art, other related accompanying drawings may also be obtained according to these accompany drawings without any inventive effort.
Fig. 1 is an operation of modeling and cutting in 3D printing technology;
Fig. 2 is a schematic diagram of a printing operation in photo-curing 3D printing;
Fig. 3 shows a flowchart of a method for 3D printing provided according to embodiments of the present invention;
Fig. 4a shows a schematic diagram of a plurality of printing models provided according to embodiments of the present invention;
Fig. 4b shows a schematic diagram in which a slice image comprises one slice cross section provided according to embodiments of the present invention;
Fig. 4c shows a schematic diagram in which a slice image comprises two slice cross sections provided according to embodiments of the present invention;
Fig. 4d shows a schematic diagram in which another slice image comprises two slice cross sections provided according to embodiments of the present invention;
Fig. 4e shows a schematic diagram in which a slice image comprises three slice cross sections provided according to embodiments of the present invention;
Fig. 4f shows a schematic diagram in which a slice image comprises four slice cross sections provided according to embodiments of the present invention;
Fig. 5a shows a schematic diagram of one cross-sectional slice image provided according to embodiments of the present invention;
Fig. 5b shows a schematic diagram of a plurality of cross-sectional slice images provided according to embodiments of the present invention;
Fig. 6a shows a schematic diagram of a circular cross-sectional slice image provided according to embodiments of the present invention;
Fig. 6b shows a schematic diagram of a rectangular cross-sectional slice image provided according to embodiments of the present invention;
Fig. 6c shows a schematic diagram of an annular cross-sectional slice image 1 provided according to embodiments of the present invention;
Fig. 6d shows a schematic diagram of an annular cross-sectional slice image 2 provided according to embodiments of the present invention;
Fig. 7a shows a schematic diagram of a slice image of two cross sections having a bounding degree C₁ provided according to embodiments of the present invention;
Fig. 7b shows a schematic diagram of a slice image 1 of two cross sections having a bounding degree C₂ provided according to embodiments of the present invention;
Fig. 7c shows a schematic diagram of a slice image 2 of two cross sections having a bounding degree C₃ provided according to embodiments of the present invention;
Fig. 8a shows a schematic diagram of a positional relationship of cross sections in a slice image provided according to embodiments of the present invention;
Fig. 8b shows a schematic diagram of a positional relationship of cross sections in another slice image provided according to embodiments of the present invention;
Fig. 9a shows a schematic diagram of a slice image of an even distribution type provided according to embodiments of the present invention;
Fig. 9b shows a schematic diagram of a slice image of an uneven distribution type provided according to embodiments of the present invention;
Fig. 10 shows a schematic diagram of a layer number - difficulty value curve provided according to embodiments of the present invention;
Fig. 11 shows a schematic diagram of an apparatus for 3D printing provided according to embodiments of the present invention; and
Fig. 12 shows a schematic diagram of a computer device provided according to embodiments of the present invention.

The figures above comprise the following reference signs:
1. Workpiece to be printed; 2. Three-dimensional model; 3. Slice layer/slice image set; 4. Slice of nth layer; 5. Slice of mth layer; 6. Forming platform; 7. Optical machine; 8. Material tray; 9. Light-transmitting portion; 10. Photo-curable printing material; 11. Printed object; 12. First target slice cross section; 13. First slice cross section; 14. Second target slice cross section; 15. Second slice cross section.

### Detailed Description of the Embodiments

In order to make objects, technical solutions and advantages of embodiments of the present invention clearer, hereinafter, the technical solutions in embodiments of the present invention will be described clearly and completely with reference to the accompanying drawings of the embodiments of the present invention. Obviously, the embodiments as described are only some of the embodiments of the present invention, and are not all the embodiments. Generally, assemblies of embodiments of the present invention as described and illustrated in the accompanying drawings herein may be arranged and designed in various different configurations. Therefore, the following detailed description of embodiments of the present invention provided in the accompanying drawings is not intended to limit the claimed scope of the present invention, but merely represent selected embodiments of the present invention. All other embodiments obtained by a person skilled in the art based on the embodiments of the present invention without involving any inventive effort shall all fall within the scope of protection of the present invention.

It should be noted that similar numerals and letters represent similar items in the following accompanying drawings, and thus once a certain item is defined in one figure, it does not need to be further defined and explained in subsequent accompanying drawings.

The term "and/or" herein merely describes an association relationship, indicating that three relationships may exist, for example, "A and/or B" may indicate three cases: A exists individually, both A and B exist, and B exists individually. In addition, the term "at least one" herein represents any one of multiple items or any combination of at least two of multiple items, for example, including at least one of A, B or C may represent including one or more group selected from groups consisting of A, B or C.

Currently, 3D printing is well known to people, and 3D printers can achieve 3D printing of objects. Common 3D printing technologies include photo-curing 3D printing technologies, such as SLA (Stereo Lithography Apparatus) photo-curing, DLP (Digital Light Processing), LCD (Liquid Crystal Display) photo-curing; FDM ( Fused Deposition Modeling); SLS (Selective Laser Sintering); SLM (Selective Laser Melting); 3DP (Three Dimensional Printing); Polyjet 3D technology.

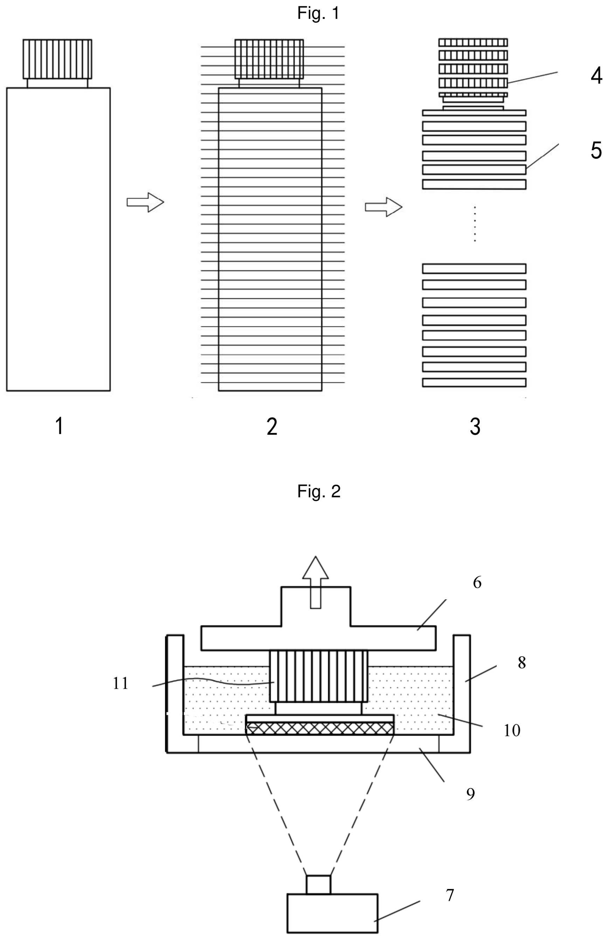

3D printing is mainly realized by means of the following method: as shown in Fig. 1, first modelling is performed by means of modelling software, specifically, first modelling is performed on an object 1 to be printed to obtain a three-dimensional model 2, and then the modeled three-dimensional model 2 is cut into two-dimensional slice images layer by layer, i.e. performing a slicing operation to obtain a plurality of slice layers/a slice image set 3. Here, the obtained two-dimensional slice images may be distinguished according to the serial number of layers, for example, a slice of *n*th layer 4 and a slice of mth layer 5. According to read cross section information of the two-dimensional pictures, a 3D printer prints these cross sections layer by layer using liquid, powder or flake-like materials.

Here, taking the photo-curing 3D printing of DLP (Digital Light Processing) as an example, as shown in Fig. 2, a printed object is cured and formed on a forming platform 6; each time after one layer is printed, the forming platform ascends to a certain height; after the printed cured layer is completely peeled off, the forming platform then descends to a corresponding position, wherein the height of the corresponding position is the thickness of a next slice layer (the thickness of a new layer); then an optical machine 7 projects light to a light-transmitting portion 9 at the bottom of a material tray 8, and a photo-curable printing material 10 in an exposure region will be cured into a solid state from a liquid state, then a new cured layer is formed between the unfinished printed object 11 and the bottom of the material tray; and the new cured layer will be attached to a previous layer of the cured printed object, thereby completing a printing operation of one slice layer; and then the forming platform ascends by a distance such that the cured layer is separated from the material tray. Layer-by-layer printing is performed in this manner, thereby obtaining a three-dimensional printed object.

Upon research, it has been found that in related 3D printing schemes, when printing the three-dimensional model, generally, a user analyzes a printing difficulty of the three-dimensional model depending on his/her own 3D printing experience, so as to set parameters of a printer based on the printing difficulty. However, each two-dimensional slice image has a cross-section pattern with different shapes, sizes or distributions, which leads to a great difference in printing difficulties of the two-dimensional slice images. A user typically set printing parameters of a printer according to printing parameters provided by the manufacturer or experience, these printing parameters are possibly not suitable for printing difficulties of all two-dimensional slice images. The set printing parameters are not suitable for some of the two-dimensional slice images if the printing parameters setting is loose, which leads to printing failure or poor printing quality of the three-dimensional model. The printing failure or poor printing quality is avoided to some extent if the printing parameters setting is strict, however, it costs a longer printing time. Therefore, it is difficult to take into account both the printing quality and the printing efficiency.

Based on the research, the present invention provides a method and an apparatus for 3D printing, a 3D printer and a computer device. In embodiments of the present invention, first, a slice image set of a three-dimensional model may be acquired, and a printing difficulty value of each slice image is calculated according to cross section information of the slice image in the slice image set. Then, printing parameters of each slice image are determined and retrieved based on the printing difficulty value, and a printing operation is determined based on the printing parameters, so as to print the three-dimensional model based on the printing operation, such that in the printing process, the printing parameters may be adaptively adjusted along with the changes in the printing difficulty values of the slice images, thereby improving the success rate of printing and the printing quality, and increasing the printing efficiency.

To facilitate understanding of this embodiment, a method for 3D printing disclosed in embodiments of the present invention is first described in detail, and an execution body of the method for 3D printing provided in the embodiments of the present invention is generally a computer device with a certain computing capability. In some possible implementations, the method for 3D printing can be implemented in a manner that a processor invokes computer-readable instructions stored in a memory.

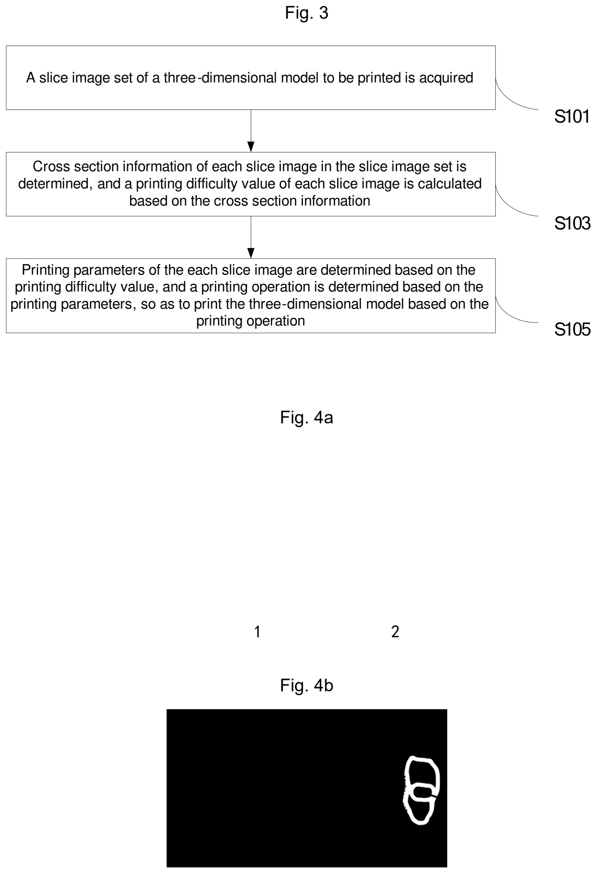

Referring to Fig. 3, which is a flowchart of a method for 3D printing provided according to embodiments of the present invention, the method for 3D printing comprises steps S101-S105, wherein:
S101: a slice image set of a three-dimensional model to be printed is acquired.

In embodiments of the present invention, a three-dimensional model of an object that a user wants to print may be imported, to perform slicing processing on the three-dimensional model. For example, a slice thickness may be preset, and slicing processing is performed on the three-dimensional model according to the slice thickness to obtain two-dimensional slice images, and a slice image set comprising the two-dimensional slice images is determined.

S103: cross section information of each slice image in the slice image set is determined, and a printing difficulty value of each slice image is calculated based on the cross section information.

In embodiments of the present invention, cross sections in each slice image may be identified, so as to obtain cross section information of the slice image. Here, the cross sections in the slice image refer to closed shapes in the slice image, and the cross sections may contain multiple pieces of closed shape. In consideration of the complexity of the three-dimensional model, the cross section included in the slice image may be single or multiple, and thus there will be different number of cross sections and cross section information. It can be understood that, the cross section in the present invention refers to a planar shape obtained by slicing a printing model with a plane, wherein the printing model comprises one or more printed objects (comprising any models requiring to be printed such as cylinders, cones, spheres, prisms, pyramids, cuboids, cubes, teeth, dental crowns and figurines).

It will be appreciated that the number of slice cross sections in the slice image constantly changes during the printing of the printing model. For example, in order to increase the utilization rate of a printing platform in a 3D printer, a plurality of printing models may be printed at the same time. Here, Fig. 4a is a schematic diagram of a plurality of printing models, including a left printing model and a right printing model.

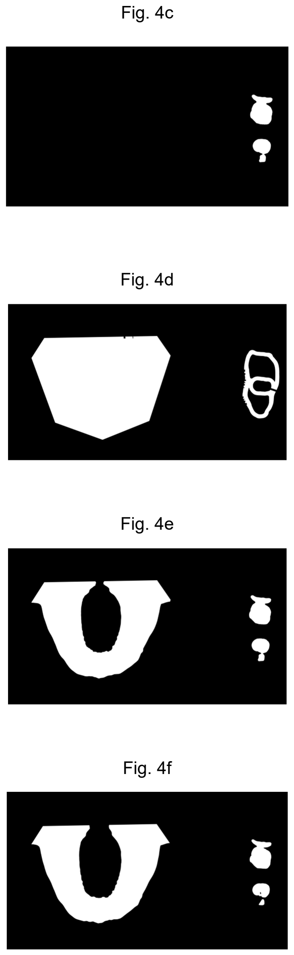

Figs. 4b-4f show at least some slice images obtained by slicing the printing models as shown in Fig. 4a, wherein the slice image shown in Fig. 4b comprises one slice cross section of a printing model, the slice image shown in Fig. 4c comprises two slice cross sections of the printing model, the slice image shown in Fig. 4d comprises one slice cross section of the printing model and one slice cross section of a printing model, the slice image shown in Fig. 4e comprises one slice cross section of the printing model and two slice cross sections of the printing model, and the slice image shown in Fig. 4f comprises one slice cross section of the printing model and three slice cross sections of the printing model.

It can be determined from Figs. 4b-4f that, in the slice image set of the printing models shown in Fig. 4a, the number of slice cross sections in different slice images changes greatly. Therefore, for a 3D printer, the difference in printing difficulties of all slice images is large. On this basis, the present invention may allow for calculation of a printing difficulty value of a slice image based on cross section information of the slice image, wherein printing parameters of different printing difficulty values may be different, such that the printing parameters of the 3D printer can be dynamically adjusted based on the printing difficulty values during the printing process.

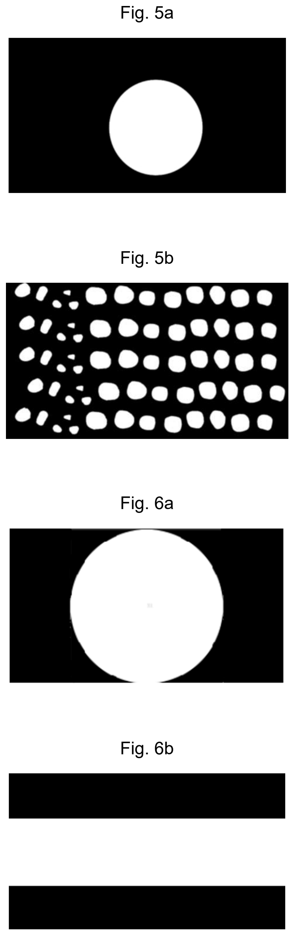

For example, the higher the printing difficulty value of a slice image is, the finer the printing operation of the 3D printer is. In the present invention, in addition to the cross section condition of the slice image itself, factors affecting the printing difficulty value further comprise the number of cross sections in the slice image. For example, in cases where there is only one single cross section in the slice image as shown in Fig. 5a, the cross section area of a circular cross section in the slice image is 1870 mm²; and in cases where there are a plurality of cross sections in the slice image as shown in Fig. 5b, the total cross section area of the cross sections in the slice image is 3740 mm². However, the printing difficulty values of the two are also 48.5. Therefore, the cross section information may be used to indicate the number of cross sections included in the slice image and cross section information of each slice image.

Likewise, considering the influence of the number of cross sections on the calculation of the printing difficulty value of the slice image, corresponding calculation methods of printing difficulty degrees may be set for slice images having a single cross section and slice images having multiple cross sections. Specific methods for calculating the printing difficulty value of the slice image is as follows, which will not be repeated herein.

S105: printing parameters of the each slice image are determined based on the printing difficulty value, and a printing operation is determined based on the printing parameters, so as to print the three-dimensional model based on the printing operation.

In embodiments of the present invention, the printing parameters may be used to indicate operation parameters of the 3D printer when a printing operation is performed on each slice image in the slice image set, for example, the operation parameters may be used to describe a specific printing speed, consumption time of printing, etc. In the process of printing the three-dimensional model, the printing parameters may be adjusted in a fine-grained manner, that is, the printing parameters of each slice image may be different, and the printing parameters of each slice image are related to the printing difficulty value of the slice image.

Here, a mapping relationship between printing difficulty ranges and printing parameters may be preset, and printing parameters of the slice image are determined based on the printing difficulty range to which the printing difficulty value of the slice image belongs. A specific method for determining the printing parameters of the slice image is as follows, and details will not be repeated herein.

When printing the three-dimensional model based on the printing operation, printing parameters of slice images of various layers may be retrieved, and slice images are printed layer by layer according to a preset printing order, until slice images in the slice image set are printed completely, and an entity of the three-dimensional model is obtained.

It can be determined from the description above that, in the embodiments of the present invention, first, a slice image set of a three-dimensional model may be acquired, and a printing difficulty value of each slice image is calculated according to cross section information in each slice image in the slice image set. Then, printing parameters of each slice image are determined based on the printing difficulty value, and a printing operation is determined based on the printing parameters, so as to print the three-dimensional model based on the printing operation, such that in the printing process, the printing parameters can be adaptively adjusted along with the changes in the printing difficulty values of the slice images, thereby improving the success rate of printing and the printing quality, and increasing the printing efficiency.

In some optional embodiments, in step S103, the cross section information comprises at least one of the number of cross sections, a cross section area or cross section shape information; and calculating the printing difficulty value of the slice image based on the cross section information specifically comprises the following process:
S11: when the number of cross sections is one, the printing difficulty value of each slice image is determined based on the cross section area and the cross section shape information.

In embodiments of the present invention, the cross section information may comprise the number of closed shapes in the slice image, and the number of closed shapes is the number of cross sections in the slice image. When the number of cross sections in the slice image is one, the cross section information may comprise the cross section area and cross section shape of the slice cross section.

For example, a deviation value between a geometric shape of the slice cross section and a preset shape may be determined based on the cross section shape information. Here, the preset shape may comprise a circle and a rectangle, and a difficulty parameter *k* for calculating the printing difficulty value may be determined based on the deviation value. For example, the closer the cross section shape of the cross section in the slice image is to a circle, the larger the difficulty parameter *k* is; on the contrary, the closer the cross section shape of the cross section in the slice image is to a rectangle, the smaller the difficulty parameter *k* is. Next, a product sum of the difficulty parameter *k* and the cross section area and data information in the cross section shape information may be calculated, and the product sum is taken as the printing difficulty value of the slice image.

By way of example, the printing difficulty value of the slice image having a circular cross section as shown in Fig. 6a is 131.38; while in the slice image having a rectangular cross section as shown in Fig. 6b, the cross section area is the same as that of Fig. 5a, but the printing difficulty value of the slice image is 81.5.

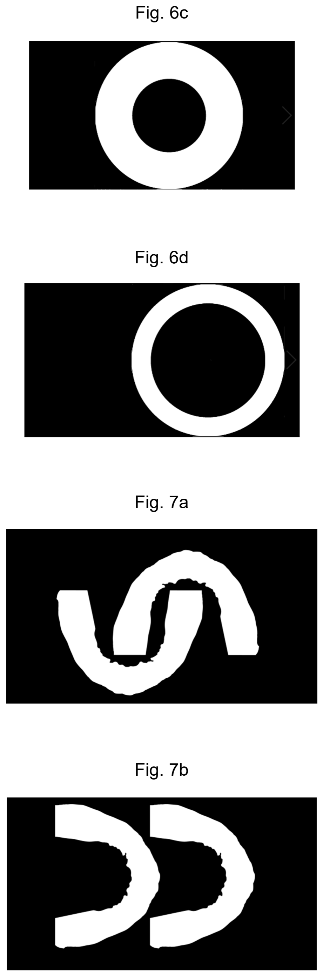

In addition, it can be determined from the content above that the product sum of the difficulty parameter *k* and other information in the cross section shape information and the cross section area is the printing difficulty value of the slice image, and then when the corresponding difficulty parameters *k* of slice images are the same, the cross section areas are inversely proportional to the printing difficulty values of the slice images. For example, in a first slice image with a circular cross section as shown in Fig. 6c and a second slice image with a circular cross section as shown in Fig. 6d, the difficulty parameters *k* of the first circular cross-sectional slice image and the second circular cross-sectional slice image are the same, but the cross section area of the first circular cross-sectional slice image is greater than the cross section area of the second circular cross-sectional slice image; and therefore the printing difficulty value of the first circular cross-sectional slice image is 80.36, and the printing difficulty value of the second circular cross-sectional slice image is 35.16.

In embodiments of the present invention, a corresponding algorithm for calculating the printing difficulty value may be determined based on the number of slice cross sections in a slice image. For example, when the number of slice cross sections in a slice image is one, the printing difficulty value of the slice image may be determined based on the cross section area and the cross section shape information of the cross section in the slice image, such that the calculated printing difficulty value is more reasonable, and is more suitable for guiding a printing operation.

In some optional embodiments, in step S11, determining the printing difficulty value of the slice image based on the cross section area and the cross section shape information specifically comprises the following process:
(1) cross section shape information is identified, to obtain data information of at least one of: cross-sectional bounding rectangle, minimum circumscribed circle or discrete degrees of cross sections in the slice image; and
(2) the printing difficulty value of the slice image is determined based on the data information and cross section areas.

In some optional embodiments, the cross section shape information may comprise data information of at least one type of: bounding rectangles, minimum circumscribed circles or discrete degree of cross section of the slice image. Specifically, the cross section shape information may be used to indicate a deviation value between a geometric shape of the slice cross section and a preset shape.

In embodiments of the present invention, the cross-sectional bounding rectangle and the minimum circumscribed circle may be used for describing the similarity between a cross section in the slice image and the preset shape, and the discrete degree may be used for indicating a deviation value of points on an edge of the cross section in the slice image relative to a central point of the slice cross section, thus, the discrete degree may be used to indicate whether the slice cross section is a regular geometric shape.

After at least one type of data information of the cross section shape information is determined, a product of each piece of data information and the difficulty parameter k may be calculated separately, and a sum of the obtained products may be used as the printing difficulty value of the slice image.

In embodiments of the present invention, the cross section shape information may comprise multiple types of data information, such that the cross section shape in the slice image can be described more precisely, and the accuracy of the calculated printing difficulty value of the slice image is higher.

In some optional embodiments, in step S103, the cross section information comprises at least one of the number of cross sections, cross section area, cross section shape information, or influence factors among the cross sections; and calculating the printing difficulty value of the slice image based on the cross section information specifically comprises the following process:
S21: when the number of cross sections is two or more, sub-difficulty value of each cross section of the slice image is calculated based on the number of cross sections, the cross section area, the cross section shape information and the influence factors among the cross sections; and
S22: the printing difficulty value of each slice image is determined based on the sub-difficulty values.

In embodiments of the present invention, the cross section information comprises at least one of: position information of each cross section in the slice image, a minimum circumscribed circle of each cross section in the slice image, a minimum bounding rectangle of each cross section in the slice image, the ratio of the area of each cross section in the slice image to the area of the entire slice image, relative positions among the cross sections in the slice image, relative area sizes among the cross sections in the slice image, a minimum spacing between the cross sections in the slice image, or the ratio of the area of all the cross sections in the slice image to the entire slice.

In embodiments of the present invention, when there are a plurality of slice cross sections in a slice image, each slice cross section has a corresponding sub-difficulty value. In addition to being affected by factors of the slice cross section itself, the sub-difficulty value of the slice cross section is also affected by the other slice cross sections in the slice image. Therefore, the cross section information may comprise cross-sectional data information of all cross sections in the slice image, or influence factors indicating mutual influence between the cross sections.

Here, the cross-sectional data information of each cross section in the slice image may comprise at least one of: position information of each slice cross section in the slice image, a cross section area of each slice cross section in the slice image, a cross section shape of each slice cross section in the slice image, a minimum circumscribed circle of each slice cross section in the slice image, or a minimum bounding rectangle of each slice cross section in the slice image.

In some optional embodiments, the influence factors among the cross sections comprise at least one of: position information of each cross section in the slice image, a minimum circumscribed circle of each cross section in the slice image, a minimum bounding rectangle of each cross section in the slice image, the ratio of the area of each cross section in the slice image to the area of the entire slice image, relative positions among the cross sections in the slice image, relative area sizes among the cross sections in the slice image, a minimum spacing between the cross sections in the slice image, or the ratio of the area of all the cross sections in the slice image to the entire slice.

After the cross section information is determined, a sub-difficulty value of each slice cross section may be calculated, wherein the method for calculating the sub-difficulty value is as described in the embodiment of step S11, and details will not be repeated herein.

After the sub-difficulty values of all slice cross sections in the slice image are calculated, a weight value of each slice cross section relative to the remaining slice cross sections in the slice image may be calculated, and a printing difficulty value of the slice image is determined based on a product sum of the weight values and the sub-difficulty values; and the specific method for determining the printing difficulty value is as described below, and details are not repeated herein.

In embodiments of the present invention, when there are a plurality of slice cross sections in a slice image, sub-difficulty values of all slice cross sections may be calculated respectively, so as to determine a printing difficulty value of the slice image based on the sub-difficulty values, such that the printing difficulty value can cover the sub-difficulty values of all the slice cross sections in the slice image.

In some optional embodiments, in step S22, the printing difficulty value of each slice image is determined based on the sub-difficulty values, comprises:
S221: target slice cross sections having sub-difficulty values satisfying a difficulty value condition in the slice image are determined, and a weight value of each of the target slice cross sections is determined.
S222: a product sum of the sub-difficulty value and the weight value of the target slice cross section is calculated, and a printing difficulty value of the slice image is determined based on the product sums.

In embodiments of the present invention, considering that when there are a large number of slice cross sections in a slice image, not all sub-difficulty values of the slice cross sections are meaningful for determining the printing difficulty value, therefore, the slice cross sections may be filtered according to the difficulty value condition, so as to obtain target slice cross sections satisfying the difficulty value condition. For example, the difficulty value condition may comprise a difficulty threshold, and slice cross sections of which the sub-difficulty values exceed the difficulty value condition may be determined as the target slice cross sections.

Next, weight values of the target slice cross sections may be determined, wherein the weight values may be a weight value set, and the weight value set comprises sub-weight values of the target slice relative to each of the remaining slice cross sections in the slice image.

For example, a slice image has cross sections M₁ -M₅, wherein a target cross section is M₁, and then sub-weight values of the target cross section relative to M₂-M₅ may be calculated separately, to obtain a weight value set {x₁₂, x₁₃, x₁₄, x₁₅}.

After the weight value set is determined, the product sum of the sub-difficulty value of the target cross section and the corresponding sub-weight values may be calculated. Specifically, a product sum of the sub-weight value and a corresponding remaining cross section may be calculated, and the product sum is added to the sub-difficulty value of the target cross section to obtain the printing difficulty value of the slice image.

In embodiments of the present invention, the weight value of the target cross section may be determined, such that when the printing difficulty value is calculated, the influence of the weight value on the sub-difficulty value can be considered, thereby preventing the calculated printing difficulty value from being inflated, and improving the confidence of the printing difficulty value.

In some optional embodiments, in step S221, the weight value of the target slice cross section is determined, which specifically comprises the following process:
(1) determing influence parameters, on the target slice cross section, of the remaining slice cross sections other than the target slice cross section in the slice image; wherein the influence parameters comprise at least one of: cross section areas, bounding rectangle areas or radii of minimum circumscribed circles of the remaining slice cross sections and the target slice cross section, or relative positions, relative area sizes or minimum spacing between the remaining slice cross sections and the target slice cross section; and
(2) the weight values are determined based on the influence parameters.

In embodiments of the present invention, it can be determined from the content above that the cross section information comprises information of influence factors indicating mutual influence between the cross sections in the slice image. On this basis, influence parameters of the remaining slice cross sections in the slice image on the target slice cross section may be determined based on the information of influence factors; and a weight value of each of the remaining slice cross sections is determined based on the influence parameters.

Specifically, among the influence parameters, the cross section areas, the bounding rectangle areas, the radii of minimum circumscribed circles, the relative areas, or the relative positions between the remaining slice cross sections and the target slice cross section are directly proportional to the weight values; and the minimum spacing between the remaining slice cross sections and the target slice cross section is inversely proportional to the weight value, that is to say, the larger the minimum spacing is, the smaller the influence of the remaining slice cross sections on the weight value of the target slice cross section is.

Here, the relative position between the remaining slice cross sections and the target slice cross section is taken as an example, and the relative position may be used to indicate whether there is bounding between the remaining slice cross sections and the target slice, to indicate the bounding degree, and the minimum spacing between the cross sections. The bounding degree may be determined by an overlapping area of bounding rectangle areas of the two, and the larger the overlapping area is, the higher the bounding degree is. It should be understood that, when other conditions are consistent, a bounding slice image is more difficult to print than a slice cross section without bounding, and the smaller the minimum spacing between cross sections, the more difficult the printing, and the higher the printing difficulty value.

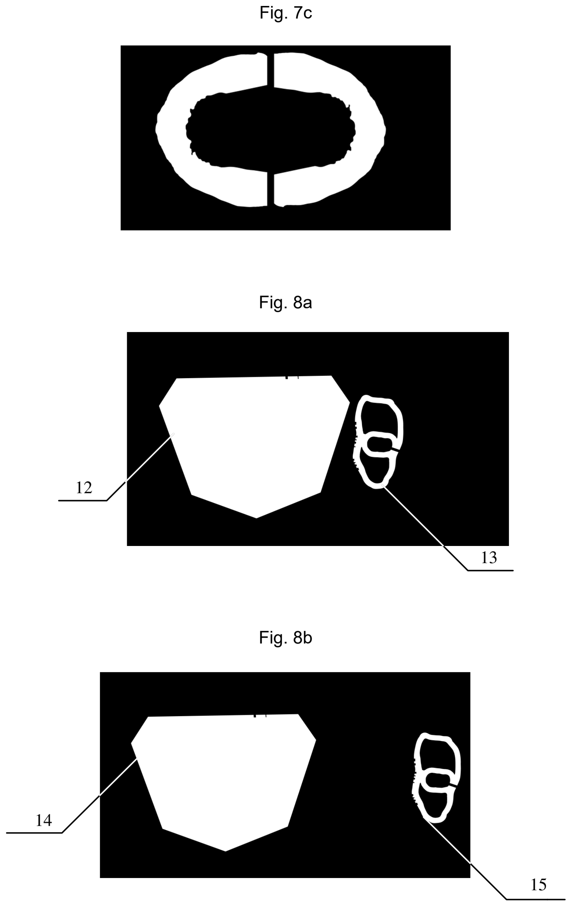

Specifically, Fig. 7a shows two slice cross sections of bounding degree C₁, Fig. 7b shows two slice cross sections of bounding degree C₂, and Fig. 7c shows two slice cross sections of non-bounding case C₃. In Fig. 7a-Fig. 7c, cross section areas of slice cross sections are the same, sub-difficulty values of individual cross sections in the slices are the same, the minimum spacings between two cross sections are the same, and the bounding degrees C₁>C₂>C₃. Therefore, weighted difficulty values of sub-difficulty values of the two slice cross sections in Fig. 7a are both 43.05, the weighted difficulty values of the slice cross sections in Fig. 7b are 38.56; and the weighted difficulty values of the slice cross sections in Fig. 7c are 36.79.

In addition, the influence degree of the relative positions between the remaining slice cross sections and the target slice cross section on the weight value is affected by the relative sizes between the two. Specifically, the larger the relative sizes between the target slice cross section and the remaining slice cross sections, the smaller the influence on the weight value, and also the smaller the influence on the calculated printing difficulty value of the slice image.

By way of example, Fig. 8a shows a schematic diagram of a position relationship of slice cross sections in a slice image, wherein the minimum spacing between a first target slice cross section 12 and a first slice cross section 13 is 3, a difficulty value of the first target slice cross section 12 is 74.38, a difficulty value of the first slice cross section 13 is 4.19, and a printing difficulty value of the slice image is 75.87.

Further, Fig. 8b shows a schematic diagram of a position relationship of slice cross sections in another slice image, wherein the minimum spacing between a second target slice cross section 14 and a second slice cross section 15 is 38.5, a difficulty value of the second target slice cross section 14 is 74.38, a difficulty value of the second slice cross section 15 is 4.19, and a printing difficulty value of the slice image is 74.38.

After the influence parameters are determined, a sub-weight value of each of the remaining slice cross sections may be determined based on the influence parameters, so as to obtain a weight value set. Here, taking the remaing slice section M₂ as an example, influence parameters of the slice section M₂ on the target slice section may be determined, for example, the cross section area, the bounding rectangle area or the radius of minimum circumscribed circle of the slice cross section M₂; and based on the cross section area, the relative area size of the slice cross section M₂ and the target slice cross section M₁ is calculated. Next, the minimum distance between the slice cross section M₂ and the target slice cross section M₁ may be calculated, and the relative position between M₂ and M₁ may be determined based on the minimum distance. Then, the sub-weight value x₁₂ of the slice cross section M2 may be determined based on the influence parameters.

In embodiments of the present invention, the influence parameters of the remaining slice cross sections other than the target slice cross section in the slice image on the target slice cross section may be respectively calculated, such that the weight value is calculated based on the influence parameter, thereby providing a technical basis for calculating a printing difficulty value of the slice image.

In some optional embodiments, in step S221, target slice cross sections having the sub-difficulty values satisfying the difficulty value condition in the slice image are determined, which specifically comprises the following process:
(1) the slice cross sections are sorted in a descending order based on the sub-difficulty values of the slice cross sections in the slice image, to obtain a sorting result; and
(2) a value selection number defined by the difficulty value condition is determined, at least one target sub-difficulty value in the sub-difficulty values is determined according to the sorting result, and a target slice cross section of each of the at least one the target sub-difficulty values is determined.

In embodiments of the present invention, it can be determined that when there are a large number of cross sections in a slice image, not all sub-difficulty values of the cross sections are meaningful for determining the printing difficulty value; moreover, if the sub-difficulty values of all the slice cross sections are calculated, the load on a processor is large, and the time for calculating the printing difficulty value is increased.

On this basis, the difficulty value condition can further comprise the number n of values to be taken, and at least one target sub-difficulty value matching the number *n* of values to be taken may be determined among all sub-difficulty values of the slice image. Specifically, first, sub-difficulty values of all cross sections may be sorted in a descending order, so as to obtain a sorting result. Next, first n sub-difficulty values in the sorting may be taken based on the sorting result as the target sub-difficulty values, such that the determined target sub-difficulty values can cover the sub-difficulty values of all the cross sections in the slice image, and the cross sections of the target sub-difficulty values are determined as the target cross sections.

In embodiments of the present invention, when there are a large number of cross sections in a slice image, based on the value selection number defined by the difficulty value condition, some cross sections may be selected from the slice cross sections as the target cross sections, so as to reduce the amount of calculation when the processor calculates the printing difficulty value, and reduce calculation time.

In some optional embodiments, after the printing difficulty value of the slice image is determined based on the sub-difficulty value in step S103, the method further comprises the following process:
(1) distribution data of slice cross sections in the slice image is determined; wherein the distribution data comprises at least one of: the number of slice cross sections, the area of each slice cross section, relative positions between the cross sections, relative sizes between the cross sections, or the ratio of the area of all the slice cross sections to the area of the entire slice image;
(2) a compensation parameter is determined based on the distribution data in cases where it is determined that the slice image is of a target type according to the distribution data; wherein the target type is used for indicating that slice cross sections in the slice image are unevenly distributed; and
(3) an update operation is performed on the printing difficulty value of the slice image based on the compensation parameter.

In embodiments of the present invention, when a slice image comprises a plurality of slice cross sections, the slice image may be classified as an even distribution type and an uneven distribution type according to the distribution condition of the slice cross sections, wherein the uneven distribution type is the target type as described above.

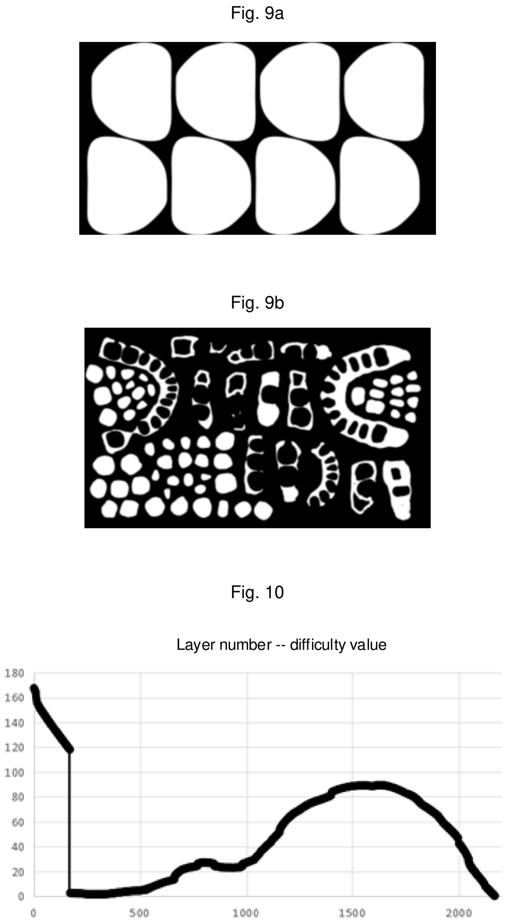

Specifically, Fig. 9a is a schematic diagram of slice image of an even distribution type, wherein the areas and relative sizes of all slice cross sections are the same, and the spacings between adjacent slice cross sections indicated by the relative position between cross sections are basically the same. In addition, Fig. 9b is a schematic diagram of a slice image of an uneven distribution type, wherein in the slice image, the areas and relative sizes of all cross sections may be different, and the spacings between adjacent slice cross sections indicated by the relative position between cross sections may also be different.

In cases where the slice image is of the target type, due to the uneven distribution of cross sections therein, uneven stress distribution may occur in the process of printing the slice image, and the stress mainly relates to reflowing and draining of a printing material, peeling of the cured layers, etc. in the printing process. On this basis, a compensation parameter of the slice image may be calculated based on the distribution data, and a printing difficulty value is updated based on the compensation parameter. For example, when the compensation parameter is large, it indicates that the degree of distribution unevenness of cross sections in the slice image is high, and an update operation may be increasing the printing difficulty value.

In embodiments of the present invention, when the cross sections of a slice image are unevenly distributed, a compensation parameter may be calculated based on the distribution data, so as to compensate for an increase in printing difficulty caused by unevenly distributed stress during the process of printing the slice image, thereby achieving a higher confidence of the determined printing difficulty value.

In some optional embodiments, the printing parameters comprise: at least one of a mask image parameter, a mask image exposure time parameter, a mask image edge optimization setting parameter, a mask image anti-aliasing optimization parameter, a mask image tolerance compensation parameter, a mask image light-uniformity optimization compensation parameter, an exposure energy parameter, an exposure time parameter, an additional exposure parameter, a forming platform lifting speed parameter, a forming platform lifting stroke parameter, a forming platform lowering speed parameter, a forming platform lowering stroke parameter, a forming platform rest time parameter, a printing wait time parameter, a light source lamp-on time parameter, a lamp-off delay time parameter, a projection screen-on time parameter, a projection screen-off delay time parameter, a slice layer thickness parameter, a predetermined bottom layer number parameter, a slice bottom layer optimization setting parameter, a printing support setting parameter, or a resin property parameter.

In embodiments of the present invention, after the printing difficulty value of each slice image is determined, for convenience of explanation and description, a layer number - difficulty value curve is generated according to the difficulty value of a cross section of each layer; and a curve of printing difficulty value to layer number of slice images of all layers is generated based on the slice image set, and the layer number - difficulty value curve is as shown in Fig. 10.

Next, a corresponding printing difficulty range may be matched based on the layer number - difficulty value curve, and corresponding printing parameters are set for each difficulty range, wherein printing parameters of each printing difficulty range are at least partially different. For example, forming platform lifting speeds of adjacent printing difficulty range 1 and printing difficulty range 2 are different; when printing a slice image of the printing difficulty range 1, the forming platform lifting speed may be 1 mm/s; and when printing a slice image of the printing difficulty range 2, the forming platform lifting speed may be 5 mm/s.

It should be understood that, in order to increase the success rate of printing the three-dimensional model, a slice image with a higher printing difficulty value may correspond to a longer printing time, so as to improve the fineness of the printing operation, such that the slice image can be successfully printed. On this basis, printing parameters such as forming platform lifting stroke, printing waiting time and exposure parameter may be directly proportional to the printing difficulty value, and printing parameters such as forming platform lifting speed and forming platform lowering speed may be inversely proportional to the printing difficulty value.

In embodiments of the present invention, the printing parameters can be dynamically adjusted according to the change in a printing difficulty value of a slice image in the printing process, thereby preventing fixed printing parameters, and reducing the occurrence probability of events like printing failure or low printing efficiency.

In some optional embodiments, in step S105, the printing operation is determined based on the printing parameters, which specifically comprises the following process:
S1051: a value range of the printing difficulty value is acquired, and a plurality of printing difficulty ranges are preset based on the value range.

S1052: printing difficulty ranges of slice images of all layers are determined based on the printing difficulty value of each slice image.

S1053: corresponding printing parameters are set for each of the printing difficulty ranges, and the printing operation is determined based on the printing parameters.

In embodiments of the present invention, a plurality of printing difficulty ranges may be determined based on the value range of the printing difficulty value and based on a preset range length. For example, if the value range of a printing difficulty value is [0-500], then the range length may be 100, and based on the range length, printing difficulty ranges [0-100], [100-200], [200-300], [300-400], and [400-500] may be obtained.

After the printing difficulty ranges are determined, a mapping relationship between the printing difficulty ranges and the printing parameters may be established. After the printing difficulty value of a slice image is determined, the printing difficulty range to which the printing difficulty value belongs may be looked up, and printing parameters having a mapping relationship with the printing difficulty range are determined.

It should be understood that the mapping between the printing difficulty ranges and the printing parameters may be one-to-many mapping, that is, each printing difficulty range may correspond to a plurality of printing parameters. For example, a first printing difficulty range corresponds to a first printing parameter and a second printing parameter, wherein the forming platform lifting speed and the forming platform lowering speed of the first printing parameter are less than the forming platform lifting speed and the forming platform lowering speed of the second printing parameter.

The printing difficulty values of a first slice image and a second slice image are the same, and the printing difficulty values belong to the first printing difficulty range. In addition, the first slice image is a slice image having multiple cross sections, and the second slice image is a slice image having a single cross section. Considering that the slice cross section area of the second slice image is greater than the slice cross section area in the first slice image, the curing time of the second slice image is longer than that of the first slice image, the printing parameters of the second slice image may be the first printing parameter, and the printing parameter of the first slice image may be the second printing parameter.

In embodiments of the present invention, multiple printing difficulty ranges may be preset according to the value range of the printing difficulty value, and corresponding printing parameters are set for each printing difficulty range, so as to adapt to the change in the printing difficulty value of the slice image in the printing process and dynamically adjust the printing parameters, thereby preventing fixed printing parameters, and reducing the occurrence probability of events like printing failure or low printing efficiency.

In some optional embodiments, the printing difficulty ranges comprise a target type range, wherein the target type range comprises a plurality of printing difficulty sub-ranges of different lengths. In step S1052, printing difficulty ranges of slice images of all layers are determined based on the printing difficulty value of each slice image, specifically comprises the following process:
(1) frequency distribution segments of the printing difficulty values are determined; wherein the frequency distribution segments are used for indicating the distribution of the number of printing difficulty values of each numerical value;
(2) a target printing difficulty value satisfying a frequency condition is determined based on the frequency distribution segments; and
(3) the target type range matching the target printing difficulty value is determined, and a printing difficulty sub-range matching the printing difficulty value of each slice image is determined in the target type range.

In embodiments of the present invention, the printing difficulty ranges may also be a target type range, and in the target type range, the range lengths of the printing difficulty sub-ranges may be different.

During specific implementation, several possible printing scenarios may be preset, and corresponding target type ranges are set for the printing scenarios. After printing difficulty values of the slice image set are determined, the distribution of the printing difficulty values of the slice image set may be calculated, to obtain frequency distribution segments of the printing difficulty values. Then, the printing difficulty value with the highest occurrence frequency may be determined, and the printing difficulty value is determined as a target printing difficulty value satisfying the frequency condition.

After the target printing difficulty value is determined, a printing scenario of the three-dimensional model may be determined. Specifically, a target type range to which the target printing difficulty value belongs may be determined, and a printing scenario of the target type range is used as the printing scenario of the three-dimensional model. Then, a corresponding printing difficulty sub-range is matched for each slice image in the target type range.

In embodiments of the present invention, the printing difficulty ranges may also be a target type range, and in the target type range, the range lengths of the printing difficulty sub-ranges may be different, so as to perform more refined division of printing difficulty ranges, thereby better adapting to the printing of three-dimensional models with smaller peak-to-peak values of printing difficulty values in a printing process.

In summary, in embodiments of the present invention, first, a slice image set of a three-dimensional model may be acquired, and a printing difficulty value of each slice image is calculated according to cross section information in each slice image in the slice image set. Then, printing parameters of each slice image are determined based on the printing difficulty value, and a printing operation is determined based on the printing parameters, so as to print the three-dimensional model based on the printing operation, such that in the printing process, the printing parameters may be adaptively adjusted along with the changes in the printing difficulty values of the slice images, thereby improving the success rate of printing and the printing quality, and increasing the printing efficiency.

A person skilled in the art may understand that, in the method of specific embodiments, a drafting sequence of all steps does not mean a strict execution sequence and not form any limitation to the implementation process, and the specific execution sequence of the steps should be determined according to the functions and possible internal logics of the steps.

Based on the same inventive concept, the embodiments of the present invention further provide an apparatus for 3D printing of the method for 3D printing. The principle for solving a problem by the apparatus in the embodiments of the present invention is similar to that of the method for 3D printing in the embodiments of the present invention, and therefore for implementation of the apparatus, reference may be made to the implementation of the method, and details will not be repeated herein.

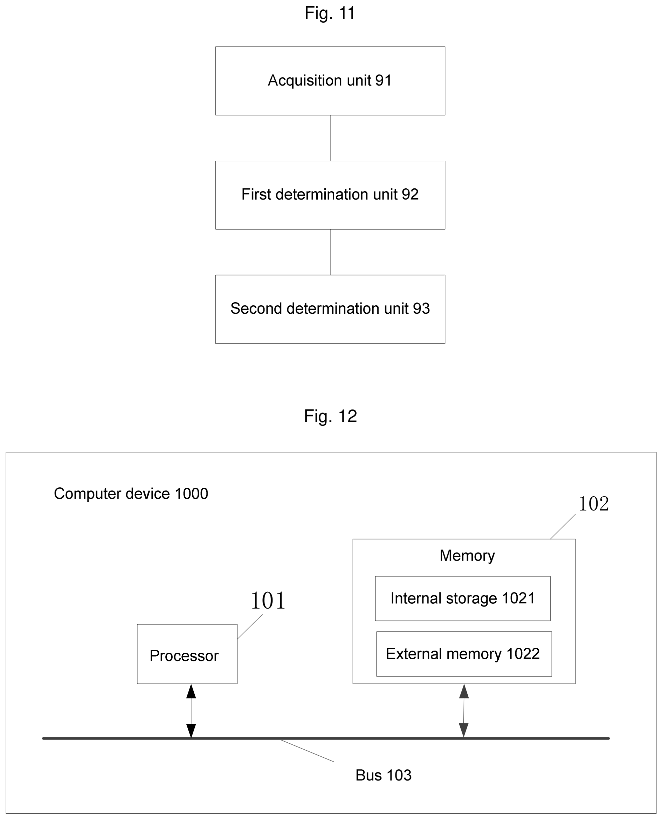

Referring to Fig. 11, which is a schematic diagram of an apparatus for 3D printing provided according to embodiments of the present invention, the apparatus comprises: an acquisition unit 91, a first determination unit 92, and a second determination unit 93; wherein
the acquisition unit 91 is configured to acquire a slice image set of a three-dimensional model to be printed;
the first determination unit 92 is configured to determine cross section information of each slice image in the slice image set, and calculate a printing difficulty value of each slice image based on the cross section information; and
the second determination unit 93 is configured to determine printing parameters of each slice image based on the printing difficulty value, and determine a printing operation based on the printing parameters, so as to print the three-dimensional model based on the printing operation.

In embodiments of the present invention, first, a slice image set of a three-dimensional model may be acquired, and a printing difficulty value of each slice image is calculated according to cross section information of slice cross sections in each slice image in the slice image set. Then, printing parameters of each slice image are determined based on the printing difficulty value, and a printing operation is determined based on the printing parameters, so as to print the three-dimensional model based on the printing operation, such that in the printing process, the printing parameters may be adaptively adjusted along with the changes in the printing difficulty values of the slice images, thereby improving the success rate of printing and the printing quality, and increasing the printing efficiency.

In some possible embodiments, the cross section information comprises at least one of the number of cross sections, a cross section area, or cross section shape information. The first determination unit 92 is further configured to:
determine the number of slice cross sections in the slice image based on the cross section information; and
when the number of cross sections is one, the cross section information comprises: cross section area and cross section shape information of a slice cross section, the first determination unit 92 is configured to
determine a printing difficulty value of the slice image based on the cross section area and the cross section shape information.

In some possible embodiments, the cross section information comprises at least one of the number of cross sections, cross section area, cross section shape information, or influence factors among the cross sections. The first determination unit 92 is further configured to:
determine the number of slice cross sections in the slice image based on the cross section information;
calculate, when the number of cross sections is two or more, sub-difficulty values of the cross sections of each slice image based on the number of cross sections, the cross section area, the cross section shape information and the influence factors among the cross sections; and
determine the printing difficulty value of each slice image based on the sub-difficulty values.

In some possible embodiments, the influence factors among the cross sections comprise at least one of: position information of each cross section in the slice image, a minimum circumscribed circle of each cross section in the slice image, a minimum bounding rectangle of each cross section in the slice image, the ratio of the area of each cross section in the slice image to the area of the entire slice image, relative positions among the cross sections in the slice image, relative area sizes among the cross sections in the slice image, a minimum spacing between the cross sections in the slice image, or the ratio of the area of all the cross sections in the slice image to the entire slice.

In some possible embodiments, the first determination unit 92 is further configured to:
determine target slice cross sections of which the sub-difficulty values satisfy a difficulty value condition in the slice image, and determine a weight value of each of the target slice cross sections; and
calculate a product sum of the sub-difficulty values and the weight values of the target slice cross sections, and determine a printing difficulty value of the slice image based on the product sum.

In some possible embodiments, the first determination unit 92 is further configured to:
determine influence parameters of the remaining slice cross sections other than the target slice cross section in the slice image on the target slice cross section; wherein the influence parameters comprise at least one of: cross section areas, bounding rectangle areas and radii of minimum circumscribed circles of the remaining slice cross sections or the target slice cross section, and relative positions, relative area sizes and minimum spacing between the remaining slice cross sections and the target slice cross section; and
determine the weight value based on the influence parameters.

In some possible embodiments, the first determination unit 92 is further configured to:
sort the slice cross sections in a descending order based on the sub-difficulty values of the slice cross sections in the slice image, to obtain a sorting result; and
determine the value selection number defined by the difficulty value condition, determine at least one target sub-difficulty value in the sub-difficulty values according to the sorting result, and determine the target slice cross section of each of the target sub-difficulty values.

In some possible embodiments, the first determination unit 92 is further configured to:
determine distribution data of slice cross sections in the slice image; wherein the distribution data comprises: at least one of the number of slice cross sections, the area of each slice cross section, relative positions between the cross sections, relative sizes between the cross sections, or the ratio of the area of all the slice cross sections to the area of the entire slice image;
determine a compensation parameter based on the distribution data in cases where it is determined that the slice image is of a target type according to the distribution data, wherein the target type is used for indicating that slice cross sections in the slice image are unevenly distributed; and
perform an update operation on the printing difficulty value of the slice image based on the compensation parameter.

In some possible embodiments, the printing parameters comprise at least one of: a mask image parameter, a mask image exposure time parameter, a mask image edge optimization setting parameter, a mask image anti-aliasing optimization parameter, a mask image tolerance compensation parameter, a mask image light-uniformity optimization compensation parameter, an exposure energy parameter, an exposure time parameter, an additional exposure parameter, a forming platform lifting speed parameter, a forming platform lifting stroke parameter, a forming platform lowering speed parameter, a forming platform lowering stroke parameter, a forming platform rest time parameter, a printing wait time parameter, a light source lamp-on time parameter, a lamp-off delay time parameter, a projection screen-on time parameter, a projection screen-off delay time parameter, a slice layer thickness parameter, a predetermined bottom layer number parameter, a slice bottom layer optimization setting parameter, a printing support setting parameter, or a resin property parameter.

In some possible embodiments, the second determination unit 93 is configured to determine a printing operation based on the printing parameters, comprising:
a value range of the printing difficulty value is acquired, and a plurality of printing difficulty ranges are preset based on the value range;
printing difficulty ranges of slice images of all layers are determined based on the printing difficulty value of each slice image; and
corresponding printing parameters are set for each of the printing difficulty ranges, and the printing operation is determined based on the printing parameters.

In some possible embodiments, for the second determination unit 93, the printing difficulty ranges comprise a target type range, wherein the target type range comprises a plurality of printing difficulty sub-ranges of different lengths; and printing difficulty ranges of slice images of all layers are determined based on the printing difficulty value of each slice image, comprising:
frequency distribution segments of the printing difficulty values are determined; wherein the frequency distribution segments are used for indicating the distribution of the number of printing difficulty values of each numerical value;
a target printing difficulty value satisfying a frequency condition is determined based on the frequency distribution segments; and
the target type range matching the target printing difficulty value is determined, and a printing difficulty sub-range matching the printing difficulty value of each slice image is determined in the target type range.

For illustration of processing flow of each unit and an interaction flow between the units in the apparatus, reference may be made to related illustration in the method embodiments, and details will not be repeated herein.

In some optional embodiments, embodiments of the present invention provide a 3D printer. The 3D printer comprises: a slicing module, a processor, a controller, a forming platform and a material tray; wherein
the slicing module is configured to acquire a slice image set of a three-dimensional model to be printed.

The processor is configured to determine a printing difficulty value of each slice image in the slice image set, and determine printing parameters of each slice image based on the printing difficulty value.

The controller is configured to control, based on the printing parameters of each slice image, the forming platform to successively execute a printing operation on the slice images of all layers.

In embodiments of the present invention, 3D model printing data after finishing setting of printing parameters may be photo-cured and printed by an LCD photo-curing 3D printer, or a DLP photo-curing 3D printer, or a CLIP photo-curing 3D printer, or an SLA photo-curing 3D printer. Embodiments of the slicing module, the processor, and the controller are as described in the embodiments above of Fig. 1, and will not be repeated herein.

The forming platform is configured to perform layer-by-layer curing and separation in response to the printing operation, so as to execute a printing operation on the slice images of all layers.

the material tray is configured to carry liquid resin, wherein after descending and curing one layer, the forming platform is separated from the material tray.

In embodiments of the present invention, the forming platform can be instructed to perform a printing operation on slice images layer by layer according to a slice sequence indicated by the slice image set. Specifically, the forming platform may discharge a liquid according to slice cross section shapes of the slice images, and cure and separate the discharged liquid resin, thereby printing a slice image of a next layer. Here, the material tray may be used for carrying the liquid resin discharged from the forming platform, and descends one layer after the liquid resin is cured, such that the material tray is separated from the forming platform, and margin for printing a slice image of a next layer is reserved for the forming platform.

It can be determined from the description above that, in the embodiments of the present invention, first, a slice image set of a three-dimensional model may be acquired, and a printing difficulty value of each slice image is calculated according to cross section information of slice cross sections in each slice image in the slice image set. Then, printing parameters of each slice image are determined based on the printing difficulty value, and a printing operation is determined based on the printing parameters, so as to print the three-dimensional model based on the printing operation, such that in the printing process, the printing parameters may be adaptively adjusted along with the changes in the printing difficulty values of the slice images, thereby improving the success rate of printing and the printing quality, and increasing the printing efficiency.

Of the method for 3D printing in Fig. 3, embodiments of the present invention further provide a computer device 1000. As shown in Fig. 12, which is a schematic structural diagram of a computer device 1000 provided according to embodiments of the present invention, the computer device comprises:
a processor 101, a memory 102, and a bus 103; wherein the memory 102 is configured to store execution instructions, and comprises an internal storage 1021 and an external memory 1022; the internal storage 1021 herein is also referred to as an internal memory, and is configured to temporarily store operation data in the processor 101 and data exchanged with the external memory 1022 such as a hard disk; and the processor 101 exchanges data with the external memory 1022 via the internal storage 1021. When the computer device 1000 runs, the processor 101 communicates with the memory 102 via the bus 103, such that the processor 101 executes the following instructions:
a slice image set of a three-dimensional model to be printed is acquired;
cross section information of slice cross sections in each slice image in the slice image set is determined, and a printing difficulty value of each slice image is calculated based on the cross section information; and
printing parameters of each slice image are determined based on the printing difficulty value, and a printing operation is determined based on the printing parameters, so as to print the three-dimensional model based on the printing operation.

Embodiments of the present invention further provide a computer-readable storage medium, the computer-readable storage medium storing a computer program thereon, wherein when run by a processor, the computer program executes the steps of the method for 3D printing in the method embodiments as described above. The storage medium may be a transitory or non-transitory computer-readable storage medium.

Embodiments of the present invention further provide a computer program product, wherein the computer program product bears program codes, and instructions comprised in the program codes may be used for executing steps of the method for 3D printing in the method embodiments as described above. For details, reference may be made to the method embodiments, and details will not be repeated herein.

The computer program product may be specifically implemented in a manner of hardware, software, or a combination thereof. In some optional embodiments, the computer program product is embodied as a computer storage medium. In some other optional embodiments, the computer program product is embodied as a software product, for example, a software development kit (SDK) or the like.

It can be clearly understood by a person skilled in the art, for convenience and conciseness of illustration, for specific working processes of the described system and apparatus, reference can be made to the corresponding process in the method embodiments as described above, and details will not repeated herein again. In the several embodiments provided in the present invention, it should be understood that the disclosed system, apparatus and method may be implemented in other manners. The apparatus embodiment described above is only schematic. For example, the division of the units can be logical functional division, and there can be other division methods in the actual implementation, for example, multiple units or assemblies can be combined or integrated into another system, or some features can be ignored or not executed. In addition, the coupling or direct coupling or communication connection shown or discussed may be indirect coupling or communication connection through some communication interfaces, apparatuses or units, and may be electrical, mechanical or other forms.

The units described as separate components may or may not be physically separated, and the components displayed as units may or may not be physical units, that is, may be located in one place, or may be distributed to multiple network units. Some or all units can be selected as actually needed to achieve the purpose of the solutions of the embodiments.

In addition, functional units in the embodiments of the present invention may be integrated into one processing unit, or the units may exist physically alone, or two or more units are integrated into one unit.

The functions, if implemented in the form of software functional units and sold or used as an independent product, may be stored in a non-transitory computer-readable storage medium executable by a processor. Based on such understanding, the portion of the technical solution of the present invention that contributes in essence or to the related art or part of the technical solution may be embodied in the form of a software product stored in a storage medium. Several instructions are included to cause a computer device (which may be a personal computer, server or network device, etc.) to perform all or some of the steps of the method in various embodiments of the present invention. Moreover, the storage medium above comprises: various media that can store program codes, such as a USB flash disk, a removable hard disk, a Read-Only Memory (ROM), a Random Access Memory (RAM), a magnetic disk, or an optical disc.

Finally, it should be noted that the embodiments above are merely specific embodiments of the present invention, and are used to describe technical solutions of the present invention, rather than limit same, and the scope of protection of the present invention is not limited thereto. Although the present invention has been explained in detail with reference to the embodiments above, a person of ordinary skill in the art would understand: any person skilled in the art who is familiar with the present technical field can still modify or easily conceive of changes to the technical solutions disclosed in the embodiments above within the technical scope disclosed in the present invention, or make equivalent replacements for some of the technical features therein; moreover, these modifications, changes or replacements shall not render that the nature of the corresponding technical solutions departs from the spirit and scope of the technical solutions in embodiments of the present invention. Therefore, the scope of protection of the present invention shall be subject to the scope of protection of the claims.

## Claims

1. A method for 3D printing, **characterized by** comprising:
acquiring a slice image set of a three-dimensional model to be printed;
determining cross section information of each slice image in the slice image set, and calculating a printing difficulty value of each slice image based on the cross section information; and
determining printing parameters of each slice image based on the printing difficulty value, and determining a printing operation based on the printing parameters, so as to print the three-dimensional model based on the printing operation.

2. The method as claimed in claim 1, **characterized in that** the cross section information comprises at least one of: the number of cross sections, a cross section area, or cross section shape information;
said calculating the printing difficulty value of each slice image based on the cross section information, comprises:
when the number of cross sections is one, determining the printing difficulty value of each slice image based on the cross section area and the cross section shape information.

3. The method as claimed in claim 1, **characterized in that** the cross section information comprises at least one of: the number of cross sections, a cross section area, cross section shape information, or influence factors among the cross sections;
said calculating the printing difficulty value of each slice image based on the cross section information, comprises:
when the number of cross sections is two or more, calculating sub-difficulty value of each cross section of each slice image based on the number of cross sections, the cross section area, the cross section shape information and the influence factors among the cross sections; and
determining the printing difficulty value of each slice image based on the sub-difficulty values.

4. The method as claimed in claim 3, **characterized in that** the influence factors among the cross sections comprise at least one of: position information of each cross section in the slice image, a minimum circumscribed circle of each cross section in the slice image, a minimum bounding rectangle of each cross section in the slice image, a ratio of an area of each cross section in the slice image to an area of an entire slice image, relative positions among the cross sections in the slice image, relative area sizes among the cross sections in the slice image, a minimum spacing between the cross sections in the slice image, or a ratio of an area of all the cross sections in the slice image to an area of an entire slice.

5. The method as claimed in claim 3, **characterized in that** determining the printing difficulty value of each slice image based on the sub-difficulty values, comprises:
determining a target slice cross section having the sub-difficulty values satisfying a difficulty value condition in the slice image, and determining a weight value of the target slice cross section; and
calculating a product sum of the sub-difficulty values and the weight values of the target slice cross sections, and determining the printing difficulty value of the slice image based on the product sum.

6. The method as claimed in claim 5, **characterized in that** determining the weight value of the target slice cross section, comprises:
determining an influence parameter of remaining slice cross sections other than the target slice cross section in the slice image on the target slice cross section; wherein the influence parameter comprises at least one of: cross section areas, bounding rectangle areas or radii of minimum circumscribed circles of the remaining slice cross sections and the target slice cross section, or a relative position, a relative area size and a minimum spacing between the remained slice cross sections and the target slice cross section; and
determining the weight value based on the influence parameter.

7. The method as claimed in claim 5, **characterized in that** determining the target slice cross section having the sub-difficulty values satisfying the difficulty value condition in the slice image, comprises:
sorting the slice cross sections in a descending order based on the sub-difficulty value of each slice cross section in the slice image, to obtain a sorting result; and
determining a value selection number defined by the difficulty value condition, determining at least one target sub-difficulty value from the sub-difficulty values according to the sorting result, and determining the target slice cross section of each of the target sub-difficulty value.

8. The method as claimed in claim 3, **characterized in that** after determining the printing difficulty value of each slice image based on the sub-difficulty values, the method further comprises:
determining distribution data of cross sections in the slice image; wherein the distribution data comprises at least one of: the number of cross sections, an area of each cross section, relative positions between the cross sections, relative sizes between the cross sections, or a ratio of an area of all the cross sections to an area of an entire slice image;
determining a compensation parameter based on the distribution data in cases where it is determined that the slice image is of a target type according to the distribution data; wherein the target type is used for indicating that slice cross sections in the slice image are unevenly distributed; and
performing an update operation on the printing difficulty value of the slice image based on the compensation parameter.

9. The method as claimed in claim 2 or 3, **characterized in that** the cross section shape information comprises data information of at least one of:
a bounding rectangle, a minimum circumscribed circle or a discrete degree of a cross section in the slice image.

10. The method as claimed in claim 1, **characterized in that** the printing parameters comprise at least one of: a mask image parameter, a mask image exposure time parameter, a mask image edge optimization setting parameter, a mask image anti-aliasing optimization parameter, a mask image tolerance compensation parameter, a mask image light-uniformity optimization compensation parameter, an exposure energy parameter, an exposure time parameter, an additional exposure parameter, a forming platform lifting speed parameter, a forming platform lifting stroke parameter, a forming platform lowering speed parameter, a forming platform lowering stroke parameter, a forming platform rest time parameter, a printing wait time parameter, a light source lamp-on time parameter, a lamp-off delay time parameter, a projection screen-on time parameter, a projection screen-off delay time parameter, a slice layer thickness parameter, a predetermined bottom layer number parameter, a slice bottom layer optimization setting parameter, a printing support setting parameter, or a resin property parameter.

11. The method as claimed in claim 1, **characterized in that** determining the printing operation based on the printing parameters, comprises:
acquiring a value range of the printing difficulty values, and presetting a plurality of printing difficulty ranges based on the value range;
determining a printing difficulty range of each slice image based on the printing difficulty value of each slice image; and
setting corresponding printing parameters for each printing difficulty range, and determining the printing operation based on the printing parameters.

12. The method as claimed in claim 11, **characterized in that** the printing difficulty range comprise a target type range, wherein the target type range comprises a plurality of printing difficulty sub-ranges of different lengths;
determining the printing difficulty range of each slice image based on the printing difficulty value of each slice image, comprises:
determining frequency distribution segments of the printing difficulty values; wherein the frequency distribution segments are used for indicating the distribution of the number of printing difficulty values of each numerical value;
determining a target printing difficulty value satisfying a frequency condition based on the frequency distribution segments; and
determining the target type range matching the target printing difficulty value, and determining, in the target type range, a printing difficulty sub-range matching the printing difficulty value of each slice image.

13. An apparatus for 3D printing, **characterized by** comprising:
an acquisition unit, configured to acquire a slice image set of a three-dimensional model to be printed;
a first determination unit, configured to determine cross section information of each slice image in the slice image set and calculate a printing difficulty value of each slice image based on the cross section information; and
a second determination unit, configured to determine printing parameters of each slice image based on the printing difficulty value and determine a printing operation based on the printing parameters, so as to print the three-dimensional model based on the printing operation.

14. A 3D printer, **characterized by** comprising: a slicing module, a processor, a controller, a forming platform and a material tray;
the slicing module is configured to acquire a slice image set of a three-dimensional model to be printed;
the processor is configured to determine a printing difficulty value of each slice image in the slice image set, and determine printing parameters of each slice image based on the printing difficulty value;
the controller is configured to control, based on the printing parameters of each slice image, the forming platform to successively execute printing operations for all the slice images;
the forming platform is configured to perform layer-by-layer curing and separation in response to the printing operation, so as to execute the printing operation for each slice image; and
the material tray is configured to carry liquid resin, wherein after descending and curing one layer, the forming platform is separated from the material tray.

15. A computer device, **characterized by** comprising: a processor, a memory and a bus, the memory storing a machine-readable instruction executable by the processor; wherein when the computer device runs, the processor communicates with the memory by means of the bus, and when the machine-readable instruction is executed by the processor, the steps of the method for 3D printing as claimed in any one of claims 1-12 are executed.

16. A computer-readable storage medium, **characterized in that** the computer-readable storage medium has a computer program stored thereon, and when executed by a processor, the computer program implements the steps of the method for 3D printing as claimed in any one of claims 1-12.
